# NEUE EUROPÄISCHE PATENTSCHRIFT

(11) **EP 2 589 452 B3**
(45) Veröffentlichungstag dieser Patentschrift: **13.11.2019**
(45) Hinweis auf die Patenterteilung: 08.02.2017
(21) Anmeldenummer: 12190885.9
(22) Anmeldetag: 31.10.2012
(51) Int. Cl.: B23C 5/00, B23C 5/10, A61C 3/02

(54) **Fräswerkzeug, Vorrichtung mit einem solchen Fräswerkzeug und Verfahren für die Herstellung von Dentalkörpern**
Milling tool, device having such a milling tool and method for the manufacture of dental bodies
Outil de fraisage, dispositif doté d'un tel outil de fraisage et procédé de fabrication de corps dentaires

(30) Priorität: 04.11.2011 DE 202011051863 U; 23.01.2012 DE 102012100508
(43) Veröffentlichungstag der Anmeldung: 08.05.2013
(73) Patentinhaber: BREDENT GMBH & CO. KG, 89250 Senden (DE)
(72) Erfinder: Mielecke, Peter, 89073 Ulm (DE)
(74) Vertreter: Baur & Weber Patentanwälte PartG mbB

(56) Entgegenhaltungen:
- DD-A5- 289 231
- DE-U1- 20 105 015
- US-A- 6 164 876
- US-A1- 2011 268 517

## Beschreibung

Die Erfindung betrifft ein Fräswerkzeug, eine Vorrichtung mit einem solchen Fräswerkzeug für die Herstellung von Dentalkörpern sowie ein Verfahren zur Herstellung von Dentalkörpern unter Verwendung eines solchen Fräswerkzeugs.

Fräswerkzeuge sind in großer Formvielfalt und für unterschiedliche Einsatzzwecke bekannt. Von Heicko Schrauben GmbH ist beispielsweise ein einschneidiger Wasserschlitzfräser mit Bohrspitze und in die Mantelfläche eingeschliffenen Zügen mit zur Wendelschneide gleichem Drall bekannt. Die Firma Spanabhebende Werkzeuge GmbH bietet u. a. einen Einzahnfräser mit solchen in die Mantelfläche eingeschliffenen Zügen und einem Stirnradius an. Ein ähnlicher Einzahnfräser mit Stirnradius von der vhf camfacture AG ist als zum Schruppen und für weichere Materialien geeignet angegeben.

Für die Herstellung von Dentalkörpern wie z. B. Zahnkronen oder Brücken sind Fräser erforderlich, welche in Freiformfräsen weitgehend beliebig dreidimensional unregelmäßig gekrümmte Geometrien sehr kleiner Abmessungen ermöglichen.

Für die Herstellung von Dentalkörpern, insbesondere Zahnprothesenkörpern werden in Dentallaboren zunehmend numerisch steuerbare Bearbeitungsstationen eingesetzt. Für die Bearbeitung typischer Werkstoffe können dabei vorteilhafterweise kostengünstige Vorrichtungen mit trockener, kühlfluidfreier Werkstückbearbeitung eingesetzt werden. Es zeigt sich aber hinsichtlich der Materialien für die Dentalkörper ein Trend zu Kunststoffen, insbesondere Thermoplasten, wie z. B. thermoplastisches PMMA oder insbesondere PEEK. Solche Kunststoffe sind zwar in Werkzeugmaschinen mit Flüssigkeitskühlung am Bearbeitungsbereich bearbeitbar, insbesondere fräsbar. Bei trockener, kühlfluidfreier Bearbeitung in den herkömmlichen Bearbeitungsstationen der Dentallabore kann die bei der Bearbeitung insbesondere durch Reibung entstehende Verlustwärme aber nicht hinreichend schnell abgeführt werden und es kann zu Beschädigungen, insbesondere Verformungen des Werkstücks kommen. Die Dentallabore stehen daher vor dem Dilemma, entweder hohe Investitionen für Bearbeitungsstationen mit aktiver Fluidkühlung zu tätigen oder die Herstellung von Dentalkörpern aus solchen Kunststoffen nicht oder wegen der Gefahr hohen Ausschusses nicht wirtschaftlich anbieten zu können.

Ein aus der DE 20105015 U1 bekannter Fräser für den Dentalbereich weist mehrere in Umfangsrichtung gegeneinander versetzte Schneiden gleicher Drallrichtung und an diesen Schneiden unterschiedlich große Kerben erster und zweiter Ordnung als eine sogenannte Kreuzverzahnung auf.

Aus der US 2011/268517 A1 ist ein Werkzeugeinsatz für eine Handbohrmaschine bekannt. Der Werkzeugeinsatz weist eine ringförmige Auskehlung auf, die sich spiralförmig fortsetzt. An gegenüber liegenden Seiten ist eine helixförmige Aussparung vorgesehen.

In der DD 289 231 A5 wird ein Holzbearbeitungswerkzeug in Form eines Oberfräsers gezeigt, das eine Umfangsschneide als Hauptschneide und eine Stirnschneide als Nebenschneide zeigt.

In der Druckschrift US 664 876 A wird ein Bohrer gezeigt, der über bleibende Bruchstücke leicht entfernt. Dazu ist eine helixförmige Hauptschneide vorgesehen, die in Zwischenbereichen eine Feinstrukturierung aufweist. Dabei kann es sich entweder um eine Profilierung handeln, die als Kreuzprofil ausgebildet ist oder es sind einzelne parallele Schneidkanten vorgesehen.

Von der Firma Digital Dental Solutions sind verschiedene Vollhartmetall-Radiusfräser bekannt, welche für die Bearbeitung von Zirkon oder PMMA, Wachs, Gips ausgebildet sein können.

Die vorstehend erwähnten Fräswerkzeuge für den Dentalbereich erweisen sich in der Praxis für die Herstellung von Dentalkörpern insbesondere aus thermoplastischen Materialien nicht als befriedigend. Insbesondere treten immer wieder lokale Überhitzungen des thermoplastischen Materials auf, wodurch häufig das bis dahin bearbeitete Werkstück verworfen werden muss.

Der vorliegenden Erfindung liegt daher die Aufgabe zugrunde, ein Fräswerkzeug und eine Vorrichtung mit einem solchen Fräswerkzeug für die Herstellung von Dentalkörpern sowie ein Verfahren zur Herstellung von Dentalkörpern unter Verwendung eines solchen Werkzeugs anzugeben, welche kostengünstig die Bearbeitung solcher Polymer-Kunststoffe, beispielsweise chemoplastischer Kunststoffe und insbesondere thermoplastischer Kunststoffe ohne Flüssigkeitskühlung ermöglichen.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Durch die einschnittige Schneidenanordnung kann der gewendelte Hauptzug mit vorteilhaft großem Durchmesser ausgebildet sein und dadurch eine schnelle Abfuhr von Spänen von der Schneidstelle insbesondere auch von der eine Radiusschneide bildenden ersten Schneide an der Spitze des Fräswerkzeugs bewirken. Der Flächenanteil des Hauptzugs innerhalb einer senkrecht zur Rotationsachse liegenden Querschnittsfläche des durch die Schneidenanordnung bestimmten Rotationsvolumens des Fräswerkzeugs beträgt vorteilhafterweise wenigstens 30 %, insbesondere wenigstens 40 %.

Die Verwendung eines solchen Fräswerkzeugs bzw. einer ein solches Fräswerkzeug enthaltenden Vorrichtung ermöglicht vorteilhafterweise ein Verfahren zur Herstellung von Dentalkörpern, insbesondere Zahnprothesenkörpern in Dentallabors mit dort üblicherweise vorhandener Ausrüstung. Insbesondere kann die Fräsbearbeitung ohne Zufuhr von Kühlfluid an die Fräsposition des Fräswerkzeugs an dem Kunststoff-Werkstück erfolgen.

Durch die an der Mantelfläche des Längsabschnitts des Grundkörpers ausgebildete Hinterschliffstruktur mit den mehreren Vertiefungen und Erhebungen zum einen kann trotz des großen Hauptzugs ein ausreichend großer Materialquerschnitt des Grundkörpers erhalten werden, wodurch sich eine hohe Festigkeit des länglichen Grundkörpers und/oder eine gute seitliche Abstützung im Werkstück und somit eine hohe Stabilität und Belastbarkeit des Fräswerkzeugs im Einsatz erzielen läßt. Der Flächenanteil des Materialquerschnitts des Grundkörpers an der Querschnittsfläche des Rotationsvolumens beträgt vorteilhafterweise wenigstens 50 %. Zugleich kann durch die Vertiefungen in der Hinterschliffstruktur wird die Größe einer eventuell auftretenden Reibfläche beim Kontakt der Hinterschliffstruktur mit dem Material des Werkstücks auf die Erhebungen beschränkt und dadurch die Wärmeentwicklung gering gehalten werden. Der Flächenanteil der eventuell mit dem thermoplastischen Material des Werkstücks in reibenden Kontakt tretenden Erhebungen an der Gesamtfläche der Mantelfläche beträgt vorteilhafterweise weniger als 20 %, insbesondere weniger als 10 % der Mantelfläche. Vorzugsweise sind die möglichen Kontaktflächen in der Erhebung annähernd linienförmig. Vorteilhafterweise sind an allen Längspositionen des Längsabschnitts des Grundkörpers in Umfangsrichtung zwischen der in Arbeitsdrehrichtung voreilenden und der nacheilenden Kante der seitlichen Öffnung des Hauptzugs immer mehrere Erhebungen und Vertiefungen aufeinander folgend angeordnet. Die Anzahl n von in Umfangsrichtung aufeinanderfolgenden Vertiefungen und Erhebungen beträgt vorteilhafterweise wenigstens n=4, insbesondere wenigstens n=6.

Die einhüllenden Linien der Umfangslinien der Mantelfläche in Querschnitten senkrecht zur Rotationsachse verlaufen von einem maximalen Radius an der Schneidkante der seitlichen Öffnung des Hauptzugs im wesentlichen spiralförmig mit kontinuierlich abnehmenden Radius zu der Rückkante mit einem minimalen Radius. Die Radiusdifferenz zwischen Schneidkante und Rückkante beträgt vorteilhafterweise wenigstens 5 %, insbesondere wenigstens 10 % des maximalen Radius, was vorteilhafterweise eine große Spandicke und dadurch eine geringe Wärmeentwicklung je abgetragener Volumeneinheit ermöglicht. Ein Drallwinkel der zweiten Schneidkante beträgt vorteilhafterweise nicht mehr als 45°, insbesondere nicht mehr als 35°, was eine hohe Schneidleistung in thermoplastischen Werkstoffen begünstigt.

Die radiale Einsenkung der Vertiefungen gegen die in Umfangsrichtung diesen benachbarte Erhebungen beträgt vorteilhafterweise wenigstens 1 %, insbesondere wenigstens 1,5 % des Radius des Rotationsvolumens. Die radiale Einsenkung ist vorteilhafterweise nichtgrößer als 5 %, insbesondere 3 % des Radius des Rotationsvolumens, wodurch eine Verringerung des Materialquerschnitts des Grundkörpers durch die Vertiefungen vorteilhaft gering gehalten werden kann.

Die Hinterschliffstruktur ist in bevorzugter Ausführung durch mehrere als gewendelte Vertiefungen in der Mantelfläche ausgeführte Züge, nachfolgend zur Unterscheidung vom Hauptzug auch als Nebenzüge bezeichnet, gebildet. Die Nebenzüge weisen vorteilhafterweise dieselbe Wendelganghöhe auf wie der Hauptzug und die gewendelte zweite Schneide. Die Nebenzüge sind vorteilhafterweise durch ein rotierendes Schleifwerkzeug, in bevorzugter Vorgehensweise durch dasselbe Schleifwerkzeug, welches zur Erzeugung des Hauptzugs eingesetzt wird, kostengünstig herstellbar.

Die Spitze des Fräswerkzeugs mit der Radius-schneide, welche ein axial gewölbtes Teilvolumen des Rotationsvolumens bewirkt, ist durch an der Stirnfläche des Fräswerkzeugs angeschliffene Freiflächen für ein axiales Einstecken des Fräswerkzeugs in das Werkstück ausgebildet. Die Radiusschneide als erste Schneide der Schneidenanordnung verläuft dabei vorteilhafterweise um ein geringes Maß an der Rotationsachse des Fräswerkzeugs vorbei und überdiese hinaus. Dies begünstigt eine korrekte Darstellung eines Fräsradius am Werkstück.

Das Fräswerkzeug ist bei der Bearbeitung des Kunststoff-Werkstücks vorteilhafterweise mit mehr als 10.000 U/min. angetrieben.
- Fig. 1: ein Fräswerkzeug in seitlicher Ansicht,
- Fig. 2: eine geschnittene Seitenansicht eines Fräswerkzeugs,
- Fig. 3: einen Schnitt durch ein Werkzeug senkrecht zur Rotationsachse,
- Fig. 4: eine axiale Ansicht auf die Werkzeugspitze,
- Fig. 5: einen Ausschnitt aus einem Fräsvorgang.

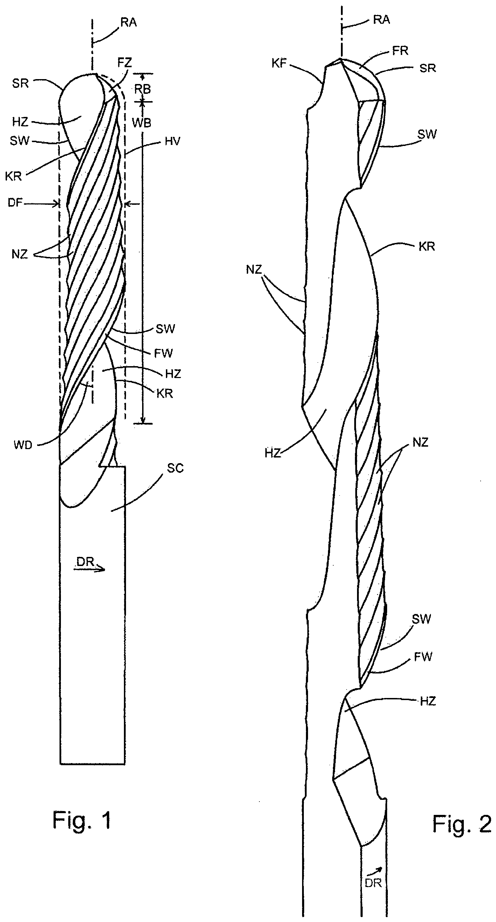

Fig. 1 zeigtin seitlicherAnsicht mit Blickrichtung senkrecht zur Rotationsachse RA ein Fräswerkzeug nach der Erfindung. Das Fräswerkzeug ist als Schaftfräser mit einem Schaft SC zum Einspannen in eine Bearbeitungsmaschine ausgeführt. An der dem Schaft SC axial entgegen gesetzten Spitze des Fräswerkzeugs ist eine gerundete Radiusschneide SR ausgebildet, welche den Einsatz des Fräswerkzeugs als Radiusschneider ermöglicht. Die Radiusschneide SR ist nachfolgend auch als erste Schneide bezeichnet. Der axiale Abschnitt, in welchem die Radiusschneide SR wirksam ist, ist mit RB bezeichnet. In einem axialen Längsbereich WB ist an dem Werkzeug eine um die Rotationsachse RA gewendelt verlaufende zweite Schneide SW ausgebildet. Die zweite Schneide SW verläuft vorzugsweise mit konstantem Radius bezüglich der Rotationsachse RA. Das bei Rotation des Fräswerkzeugs um die Rotationsachse RA von der einschnittigen Schneidenanordnung mit erster Schneide SR und zweiter Schneide SW eingenommene einhüllende Rotationsvolumen ist in Fig. 1 mit unterbrochener Linie dargestellt. Das Rotationsvolumen HV besitzt im Längsabschnitt WS den konstanten Durchmesser DF. Die Ausbildung eines konstanten Durchmessers ist von besonderem Vorteil, insbesondere hinsichtlich der Herstellung des Werkzeugs, ist aber nicht zwingend. Der Durchmesser DF ist insbesondere am Übergang zum Spitzenbereich RB, nicht größer als 3 mm, insbesondere nicht größer als 2 mm. Im axialen Abschnitt RB nimmt das Rotationsvolumen die Form eines konvex von dem Fräswerkzeug weg gewölbten Rotationskörpers ein. Die axialen Bereiche RB und WB seien als Grundkörper bezeichnet. Das Fräswerkzeug ist vorzugsweise einteilig materialhomogen ausgeführt.

Für die Herstellung des Werkzeugs wird vorteilhafterweise in einem Werkzeug-Rohling mit einem Schleifwerkzeug, welches insbesondere scheibenförmig ausgebildet sein kann, ein Hauptzug HZ in Form einer gewendelten Vertiefung mit einer mit der Rotationsachse RA zusammen fallenden Wendelachse erzeugt. Der Hauptzug HZ ist in vorteilhafter Ausführung über den gesamten, durch Längsbereich WB und Radiusbereich RB gebildeten Arbeitsbereich des Grundkörpers des Fräswerkzeugs mit konstantem Querschnitt durchgehend ausgebildet. Die seitliche, radial nach außen weisende Öffnung des Hauptzugs HZ ist durch die gewendelte zweite Schneide SW als einer Öffnungskante und eine in Umfangsrichtung gegenüber liegende zweite Kante RK, welche auch als Rückkante bezeichnet ist, begrenzt.

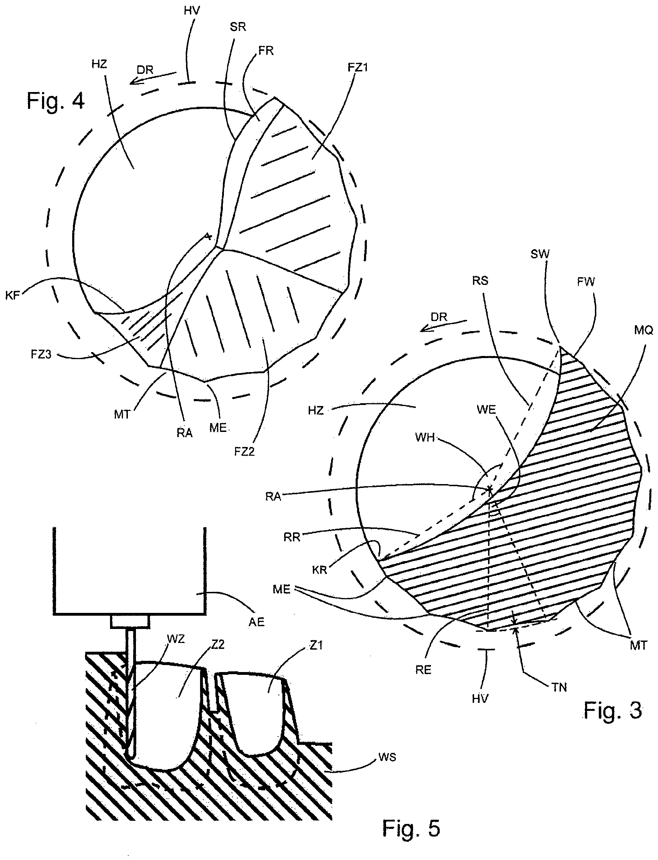

In Fig. 3 ist vergrößert ein Querschnitt durch ein Fräswerkzeug nach Art der Fig. 1 mit einer Schnittebene senkrecht zur Rotationsachse RA im Bereich des Längsabschnitts WB dargestellt. Die zweite Schneide SW bildet eine in Drehrichtung DR weisende Schneidkante, welche mit ihrem Abstand RS den Hüllkreis des Rotationsvolumens HV in der Schnittebene der Fig. 3 bestimmt. Die Rückkante KR verläuft gewendelt in einem gegenüber der zweiten Schneide SW geringeren Radius RR von der Drehachse DA.

Bezüglich der Drehrichtung DR hinter der zweiten Schneide SW ist in an sich bekannter Ausführung eine Freifläche FW ausgebildet, welche gegenüber dem Hüllkreis des Rotationsvolumens HV mit dem Radius RS = DF/2 um ein geringes Maß zurückweicht. Die nach der Freifläche FW folgende Umfangsfläche des Fräswerkzeugs, welche als Mantelfläche oder auch als Rückfläche bezeichnet sei, verläuft annähernd spiralförmig mit abnehmendem Radius bis zu der Rückkante KR.

Die den Hauptzug HZ bildende Aussparung im Querschnitt des Fräswerkzeugs reicht vorteilhafterweise wie in Fig. 3 skizziert ungefähr bis zur Rotationsachse RA und in bevorzugter Ausführung um ein geringes Maß, welches vorteilhafterweise nicht größer ist als 10 % des Radius RS, über die Rotationsachse hinaus. Der Grundkörper hat dann keinen Kern oder Seele.

In der Mantelfläche von der zweiten Schneide SW bis zu der Rückkante KR ist eine Hinterschliffstruktur ausgebildet, welche eine Mehrzahl von in Umfangsrichtung aufeinander folgenden Vertiefungen MT und Erhebungen ME aufweist. Die Erhebungen ME liegen vorzugsweise annähernd auf einer Spiralbahn von der Schneidkante SW bis zu der Rückkante RK. Die Erstreckung der Erhebungen ME in Umfangsrichtung ist vorteilhafterweise so klein, dass der Flächenanteil der Erhebungen ME an der Mantelfläche maximal 20 %, insbesondere maximal 10 % beträgt. Vorzugsweise sind die Erhebungen ME in der Mantelfläche im wesentlichen linienförmig durch die Zeichenebene der Fig. 3 durchstoßend ausgebildet. Die Vertiefungen MT weisen gegenüber den Erhebungen ME eine radiale Einsenkung TN auf, welche vorteilhafterweise wenigstens 1 %, insbesondere wenigstens 1,5 % des Radius RS der zweiten Schneide SW und höchstens 5 %, insbesondere höchstens 3 % des Radius RS der zweiten Schneide SW beträgt.

In Umfangsrichtung aufeinander folgende Erhebungen ME sind vorteilhafterweise um einen Winkel WE von wenigstens 15°, insbesondere wenigstens 20° voneinander beabstandet. Die Weite der Vertiefungen MT in Umfangsrichtung beträgt vorteilhafterweise weniger als 50°, insbesondere weniger als 40°, vorzugsweise weniger als 35°, was für eine radiale gleichmäßige Abstützung vorteilhaft ist. Die Anzahl der in Umfangsrichtung alternierend aufeinander folgenden Erhebungen ME und Vertiefungen MT beträgt vorteilhafterweise wenigstens n=4, insbesondere wenigstens n=6. Im dargestellten Beispiel beträgt die Anzahl n=8. Typischerweise ist die Anzahl der Vertiefungen bei kleineren Schneidenradien RS geringer als bei größeren Schneidenradien. Die Schneidenradien RS sind für die Herstellung von Dentalkörpern vorteilhafterweise nicht größer als 1,5 mm, insbesondere nicht größer als 1 mm.

Die Erhebungen ME und Vertiefungen MT in der den Hauptzug HZ abgewandten Mantelfläche des Fräswerkzeugs sind in bevorzugter Ausführung wie aus der Darstellung nach Fig. 1 ersichtlich als gewendelte Vertiefungen gegen eine Einhüllendenfläche der Mantelfläche ausgebildet. Diese Vertiefungen der Hinterschliffstruktur sind nachfolgend auch als Nebenzüge NZ bezeichnet. Die Nebenzüge sind vorzugsweise gewendelt mit einer zum gewendelten Verlauf der zweiten Schneide SW gleichen Wendelganghöhe. Aufgrund der annähernd spiralförmig verlaufenden Einhüllendenlinien der Umfangslinien der Mantelfläche ergibt sich für die der Rückkante KR nahen Nebenzüge eine größere Wendelsteigung und ein geringerer Radius als für die der zweiten Schneide SW nahen Nebenzüge. Aufgrund des von der Schneidkante SW zur Rückkante KR abnehmenden Radius erscheint die Projektion des Fräswerkzeugs in der in Fig. 1 dargestellten Ansicht mit einem von der Hüllfläche des Rotationsvolumens DF abweichenden konischen Verlauf.

Der Öffnungswinkel WE der radial nach seitlich außen weisenden Öffnung des Hauptzugs HZ beträgt vorteilhafterweise wenigstens 110°, insbesondere wenigstens 130°. Vorteilhafterweise beträgt der Öffnungswinkel WH nicht mehr als 180°, insbesondere nicht mehr als 160°. Der Flächenanteil des Hauptzugs HZ an der durch den Hüllkreis des Rotationsvolumens HV bestimmten Querschnittsfläche beträgt vorteilhafterweise wenigstens 30 %, insbesondere wenigstens 40 % der Kreisfläche und vorteilhafterweise höchstens 60 %, insbesondere höchstens 50 % der Kreisfläche.

Durch die einschnittige Ausführung des Fräswerkzeugs und den großen Querschnittsflächenanteil des Hauptzugs ist eine gute Spanabfuhr gewährleistet, was wiederum die Ausbildung des Fräswerkzeugs für einen hohen Spanabtrag mit großer Spandicke ermöglicht. Eine große Spandicke ist insbesondere durch den Radiusunterschied der Rückkante KR gegen die zweite Schneide SW gegeben. Ein hoher Spanabtrag wird vorteilhafterweise durch einen kleinen Drallwinkel WD begünstigt. Durch die einschnittige Ausführung des Werkzeugs verbleibt vorteilhafterweise ein für die Stabilität des Werkzeugs im Fräsbetrieb ausreichende Material-Querschnittsfläche MQ des Grundkörpers des Fräswerkzeugs, welcher in Fig. 3 schraffiert ist. Die Mehrzahl der Vertiefungen MT in der Mantelfläche des Werkzeugsabschnitts im LängsabschnittWB bewirkt vorteilhafterweise eine geringe Berührungsfläche des Werkzeugs mit dem thermoplastischen Material des Werkstücks und dadurch eine geringe Wärmeentwicklung.

Die Hinterschliffstruktur mit den Nebenzügen NZ in der Mantelfläche des Längsabschnitts WB des Fräswerkzeugs ist in vorteilhafter Ausführung mittels eines Schleifwerkzeugs herstellbar, wobei vorzugsweise bei der Herstellung der Nebenzüge NZ dasselbe Schleifwerkzeug verwendet werden kann, welches auch für die Herstellung des Hauptzugs HZ eingesetzt wird. Durch die gleiche Wendelganghöhe der Nebenzüge NZ und der zweiten Schneide SW bzw. des Hauptzugs HZ wird die Steuerung des Schleifwerkzeugs für Hauptzug und Nebenzüge vorteilhaft einfach. Die annähernd linienförmigen gewendelten Erhebungen der Hinterschliffstruktur ergeben sich dabei automatisch als Schnittlinien der gekrümmten Schleifwerkzeugflächen der nacheinander geschliffenen Nebenzüge.

Im Radiusbereich RB an der Spitze des Fräswerkzeugs ist vorteilhafterweise hinter der Radius-schneide SR ein Freischliff FZ vorgesehen, welcher in Fig. 1 überwiegend verdeckt ist. In Fig.4 ist in einer axialen Ansicht auf die Spitze des Fräswerkzeugs eine bevorzugte Ausführung des Freischliffs FZ dargestellt. Der ersten Schneide SR, welche gegen die Zeichenebene der Fig. 4 aufgewölbt verläuft, ist eine erste, der Schneidenkontur der ersten Schneide ungefähr folgende Freifläche FR zugeordnet. In Umfangsrichtung weiter von der ersten Schneide SR beabstandet folgen Freiflächen FZ1 und FZ2, welche in für die Herstellung vorteilhafter Ausführung durch eben geschliffene Flächen ausgebildet sein können. Anstelle der eben geschliffenen Freiflächen FZ1 und FZ2 kann aber auch eine kontinuierlich durchgehende, kegelstumpfähnliche Freifläche vorgesehen sein. Vorteilhafterweise ist eine weitere Freifläche FZ3 unmittelbar am Hauptzug HZ steiler gegen die Richtung der Rotationsachse geschliffen als die Freiflächen FZ1 und FZ2. Es zeigt sich, dass der steilere Schliff der weiteren Freifläche FZ3 vorteilhafterweise das Abbrechen von Materialspänen begünstigt. Die aus dem Schnitt der weiteren Freifläche FZ3 mit dem Hauptzug HZ entstehende Kante in der Stirnfläche ist mit KF bezeichnet. Die Radiusschneide SR als erste Schneide der einschnittigen Schneidanordnung verläuft von der zweiten Schneide SW her in der Ansicht nach Fig. 4 gekrümmt auf die Rotationsachse RA zu und um ein geringes Maß radial von der Rotationsachse beabstandet an dieser vorbei und um ein geringes Maß über diese hinaus.

Fig. 2 zeigt in längsgeschnittener Darstellung mitgegen die Zeichenebene verdrehter Schnittebene ein weiteres Fräswerkzeug der in Fig. 1 dargestellten Art, wobei in diesem Beispiel die Wendelganghöhe der gewendelten Strukturen größer ist als im Beispiel der Fig. 1. Aus Fig. 2 wird anschaulich der Verlauf des die Rotationsachse RA mit umfassenden Hauptzugs HZ ersichtlich. In Fig. 2 ist auch der Freischliff FR unmittelbar hinter der ersten Schneide SR und die Kante KF gut erkennbar.

Fig. 5 zeigt schematisch den Einsatz eines Fräswerkzeugs WZ der beschriebenen Art bei der Herstellung von Dentalkörpern, beispielsweise Zahnkronen, aus einem chemoplastischen oder thermoplastischen Kunststoff-Werkstück WS. Durch die feinen Strukturen insbesondere auch von Hohlräumen in den Dentalkörpern Z1, Z2 sind Fräswerkzeuge mit im Verhältnis zum Durchmesser großer Länge erforderlich. Fig. 5 zeigt ein Zwischenstadium des Fräsvorgangs, in welchem ein Teil der Strukturen der Dentalkörper Z1, Z2 bereits erstellt sind. Die endgültigen Konturen sind mit unterbrochenen Linien eingezeichnet. Ein Materialabtrag durch das Fräswerkzeug FZ erfolgt sowohl durch die Radiusschneide an der Spitze des Werkzeugs als auch durch die gewendelte zweite Schneide im Längsbereich WB des Werkzeugs. Das Fräswerkzeug WZ ist in eine Aufnahme einer Antriebseinrichtung AE eingespannt und im Fräsbetrieb mit vorzugsweise mehrals 10.000 Umdrehungen pro Minute angetrieben.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fräswerkzeug (WZ) für die trockene, kühlfluidfreie Bearbeitung von Dentalwerkkörpern aus Kunststoffmaterial, insbesondere aus chemoplastischem oder thermoplastischem Material (WS), mit einem um eine Rotationsachse (RA) rotierbaren, über einen Arbeitsbereich (RB, WB) axial langgestreckten Grundkörper, wobei
- in dem Grundkörper ein Hauptzug (HZ) als eine gewendelte Vertiefung gegenüber dem durch das rotierende Fräswerkzeug eingenommenen Rotationsvolumen (HV) ausgebildet ist, welche in Rotationsrichtung eine Schneidkante und eine Rückkante (KR) bestimmt,
- an der Schneidkante des Hauptzugs (HZ) eine Schneidenanordnung ausgebildet ist, welche eine erste Schneide (SR) als eine Radius-Schneide an der Spitze (RB) des Fräswerkzeugs und axial an diese anschließend eine um einen Längsabschnitt (WB) des Grundkörpers gewendelte zweite Schneide (SW) umfasst,
- der ersten und der zweiten Schneide (SR, SW) eine erste bzw. zweite Freifläche zugeordnet ist,
- die Mantelfläche des Längsabschnitts (WB) eine Hinterschliffstruktur mit einer Mehrzahl von Vertiefungen (MT) und Erhebungen (ME) aufweist,
- an der Spitze (RB) nach der der ersten Schneide zugeordneten der Schneidenkontur der ersten Schneide folgende Freifläche (FR) wenigstens eine weitere Freischlifffläche (FZ1, FZ2, FZ3) vorgesehen ist,
wobei die Mehrzahl von Vertiefungen (MT) und Erhebungen (ME) alternierend und von der zweiten Schneide (SW) zu der Rückkante (KR) mit abnehmenden Radius mit einer zum gewendelten Verlauf der zweiten Schneide (SW) gleichen Wendelganghöhe und zunehmender Wendelgangsteigung gewendelt angeordnet sind, so dass eine Projektion des Fräswerkzeugs (WZ) einen von einer Hüllfläche eines Rotationsvolumens (DF) abweichenden konischen Verlauf aufweist.

2. Fräswerkzeug nach Anspruch 1, **dadurch gekennzeichnet, dass** die den Hauptzug (HZ) bildende Vertiefung radial im wesentlichen bis zur Rotationsachse (RA) reicht und diese vorzugsweise mit umfasst.

3. Fräswerkzeug nach Anspruch 1 oder 2, **dadurch gekennzeichnet, dass** im Längsabschnitt (WB) der Flächenanteil des Hauptzugs an der Querschnittfläche des Rotationsvolumens (HV) wenigstens 30 %, insbesondere wenigstens 40 % und höchstens 60 %, insbesondere höchstens 50 % beträgt.

4. Fräswerkzeug nach einem der Ansprüche 1 bis 3, **dadurch gekennzeichnet, dass** die seitliche Öffnung des Hauptzugs in Umfangsrichtung zwischen Schneidkante (SW) und Rückkante (KR) wenigstens 110°, vorzugsweise wenigstens 130° beträgt.

5. Fräswerkzeug nach einem der Ansprüche 1 bis 4, **dadurch gekennzeichnet, dass** die seitliche Öffnung des Hauptzugs in Umfangsrichtung höchstens 180°, insbesondere höchstens 160° beträgt.

6. Fräswerkzeug nach einem der Ansprüche 1 bis 5, **dadurch gekennzeichnet, dass** die Querschnittsform des Hauptzugs (HZ) im Längsbereich (WB) und der Spitze (RB) gleich ist.

7. Fräswerkzeug nach einem der Ansprüche 1 bis 6, **dadurch gekennzeichnet, dass** die Rückkante (KR) der seitlichen Öffnung des Hauptzugs (HZ) um wenigstens 10 %, insbesondere wenigstens 20 % näher an der Rotationsachse verläuft als die zweite Schneide (SW) an der Schneidkante.

8. Fräswerkzeug nach einem der Ansprüche 1 bis 7, **dadurch gekennzeichnet, dass** die Hinterschliffstruktur in Umfangsrichtung aufeinander folgend alternierend mehrere Vertiefungen (MT) und mehrere Erhebungen (ME) aufweist.

9. Fräswerkzeug nach Anspruch 8, **dadurch gekennzeichnet, dass** die Anzahl n von Erhebungen und Vertiefungen jeweils wenigstens n=4, insbesondere wenigstens n=6 beträgt.

10. Fräswerkzeug nach Anspruch 8 oder 9, **dadurch gekennzeichnet, dass** in Umfangsrichtung benachbarte Erhebungen (ME) um einen Winkel (WE) von wenigstens 10°, vorzugsweise wenigstens 15° gegeneinander versetzt angeordnet sind.

11. Fräswerkzeug nach einem der Ansprüche 1 bis 10, **dadurch gekennzeichnet, dass** der Flächenanteil der Erhebungen an der Mantelfläche maximal 20 %, insbesondere maximal 10 % beträgt.

12. Fräswerkzeug nach Anspruch 11, **dadurch gekennzeichnet, dass** die Erhebungen im wesentlichen linienförmig sind.

13. Fräswerkzeug nach einem der Ansprüche 1 bis 12, **dadurch gekennzeichnet, dass** die Vertiefungen um maximal 5 %, insbesondere maximal 3 % des Radius des Rotationsvolumens radial gegen die benachbarten Erhebungen eingesenkt sind.

14. Fräswerkzeug nach einem der Ansprüche 1 bis 13, **dadurch gekennzeichnet, dass** die Vertiefungen (MT) um wenigstens 1 %, insbesondere wenigstens 1,5 % des Radius des Rotationsvolumens radial gegen die benachbarten Erhebungen (ME) eingesenkt sind.

15. Fräswerkzeug nach einem der Ansprüche 1 bis 14, **dadurch gekennzeichnet, dass** die Vertiefungen (MT) durch mehrere gewendelte Nebenzüge (NZ) in der Mantelfläche gebildet sind.

16. Fräswerkzeug nach Anspruch 15, **dadurch gekennzeichnet, dass** die Nebenzüge (NZ) dieselbe Wendelganghöhe aufweisen wie die zweite Schneide (SW).

17. Fräswerkzeug nach einem der Ansprüche 1 bis 16, **dadurch gekennzeichnet, dass** der Radius der Schneidenanordnung maximal 1,5 mm beträgt.

18. Fräswerkzeug nach einem der Ansprüche 1 bis 17, **dadurch gekennzeichnet, dass** die axiale Länge der Schneidenanordnung wenigstens das 3-fache ihres maximalen Durchmessers beträgt.

19. Vorrichtung zur Herstellung von Dentalkörpern durch trockene, kühlfluidfreie Fräsbearbeitung eines Werkstücks aus einem thermoplastischen Material, mit einem um eine Rotationsachse rotierbaren und dreidimensional relativ zum Werkstück verlagerbaren Fräswerkzeug nach einem der Ansprüche 1 bis 18.

20. Verfahren zur Herstellung von Dentalkörpern aus Kunststoff, **gekennzeichnet durch** die Verwendung eines Fräswerkzeugs (WZ) nach Anspruch 1 zur Fräsbearbeitung eines Kunststoff-Werkstücks (WS) ohne Zufuhr von Kühlfluid an die Fräsposition.

21. Verfahren nach Anspruch 20, **dadurch gekennzeichnet, dass** ein Werkstück aus thermoplastischem oder chemoplastischen Kunststoff gewählt wird.

22. Verfahren nach Anspruch 20 oder 21, **dadurch gekennzeichnet, dass** das Fräswerkzeug mit wenigstens 10.000 U/min angetrieben wird.

## Claims

1. Milling tool (WZ) for the dry, cooling-fluid-free machining of dental appliances of plastics material, in particular of chemoplastic or thermoplastic material (WS), comprising a main body that is rotatable about an axis of rotation (RA) and is elongated axially over a working region (RB, WB), wherein
- in the main body, a main feature (HZ) is formed with respect to the rotation volume (HV) that is taken up by the rotating milling tool as a helical depression, which in the direction of rotation determines a cutting edge and a rear edge (KR),
- formed at the cutting edge of the main feature (HZ) is a cutter assembly, which comprises a first cutter (SR) as a radius cutter at the tip (RB) of the milling tool and, axially adjoining thereto, a second cutter (SW), extending helically around a longitudinal portion (WB) of the main body,
- the first and the second cutter (SR, SW) is assigned a first and a second clearance face,
- the lateral surface of the longitudinal portion (WB) has an undercut structure with a plurality of depressions (MT) and elevations (ME),
- at least one further relief-ground face (FZ1, FZ2, FZ3) is provided at the tip (RB) after the clearance face (FR) assigned to the first cutter and following the cutter contour of the first cutter, where the plurality of depressions (MT) and elevations (ME) are arranged in an alternating manner and helically along the decreasing radius from the second cutting edge (SW) to the rear edge (KR) with a helical pitch equal to the helical pitch of the second cutting edge (SW) and increasing helical lead angle, so that a projection of the milling tool (WZ) has a helical pitch deviating from an enveloping surface of a rotational volume (DF).

2. Milling tool according to Claim 1, **characterized in that** the depression forming the main feature (HZ) extends radially substantially up to the axis of rotation (RA) and preferably also includes the latter.

3. Milling tool according to Claim 1 or 2, **characterized in that**, in the longitudinal portion (WB), the proportion of the cross-sectional area of the rotation volume (HV) that is made up by the main feature is at least 30%, in particular at least 40% and at most 60%, in particular at most 50%.

4. Milling tool according to one of Claims 1 to 3, **characterized in that** the side opening of the main feature in the circumferential direction between the cutting edge (SW) and the rear edge (KR) is at least 110°, preferably at least 130°.

5. Milling tool according to one of Claims 1 to 4, **characterized in that** the side opening of the main feature in the circumferential direction is at most 180°, in particular at most 160°.

6. Milling tool according to one of Claims 1 to 5, **characterized in that** the cross-sectional form of the main feature (HZ) is the same in the longitudinal region (WB) and the tip (RB).

7. Milling tool according to one of Claims 1 to 6, **characterized in that** the rear edge (KR) of the side opening of the main feature (HZ) runs at least 10%, in particular at least 20%, closer to the axis of rotation than the second cutter (SW) at the cutting edge.

8. Milling tool according to one of Claims 1 to 7, **characterized in that** the undercut structure has a number of depressions (MT) and a number of elevations (ME) following one another in an alternating manner in the circumferential direction.

9. Milling tool according to Claim 8, **characterized in that** the number n of elevations and depressions is in each case at least n=4, in particular at least n=6.

10. Milling tool according to Claim 8 or 9, **characterized in that** circumferentially adjacent elevations (ME) are arranged offset from one another by an angle (WE) of at least 10°, preferably at least 15°.

11. Milling tool according to one of Claims 1 to 10, **characterized in that** the proportion of surface area of the lateral surface that is taken up by the elevations is a maximum of 20%, in particular a maximum of 10%.

12. Milling tool according to Claim 11, **characterized in that** the elevations are substantially linear.

13. Milling tool according to one of Claims 1 to 12, **characterized in that** the depressions are recessed radially with respect to the adjacent elevations by a maximum of 5%, in particular a maximum of 3%, of the radius of the rotation volume.

14. Milling tool according to one of Claims 1 to 13, **characterized in that** the depressions (MT) are recessed radially with respect to the adjacent elevations (ME) by at least 1%, in particular at least 1.5%, of the radius of the rotation volume.

15. Milling tool according to one of Claims 1 to 14, **characterized in that** the depressions (MT) are formed by a number of helical secondary features (NZ) in the lateral surface.

16. Milling tool according to Claim 15, **characterized in that** the secondary features (NZ) have the same helical pitch as the second cutter (SW).

17. Milling tool according to one of Claims 1 to 16, **characterized in that** the radius of the cutter arrangement is a maximum of 1.5 mm.

18. Milling tool according to one of Claims 1 to 17, **characterized in that** the axial length of the cutter arrangement is at least 3 times its maximum diameter.

19. Device for producing dental appliances by dry, cooling-fluid-free milling machining of a workpiece of a thermoplastic material, comprising a milling tool according to one of Claims 1 to 18 that can be rotated about an axis of rotation and can be displaced three-dimensionally in relation to the workpiece.

20. Method for producing dental appliances from plastic, **characterized by** the use of a milling tool (WZ) according to Claim 1 for the milling machining of a plastic workpiece (WZ) without supplying cooling fluid to the milling position.

21. Method according to Claim 20, **characterized in that** a workpiece of thermoplastic or chemoplastic material is chosen.

22. Method according to Claim 20 or 21, **characterized in that** the milling tool is driven at at least 10 000 rpm.

## Revendications

1. Outil de fraisage (WZ) pour l'usinage à sec, sans fluide de refroidissement, de corps dentaires en matériau synthétique, en particulier en matériau chimioplastique ou thermoplastique (WS), avec un corps de base pouvant tourner autour d'un axe de rotation (RA) et allongé axialement sur une zone de travail (RB, WB), dans lequel
- une gorge principale (HZ) est réalisée dans le corps de base sous la forme d'un creux hélicoïdal par rapport au volume de rotation (HV) occupé par l'outil de fraisage en rotation, laquelle définit dans le sens de la rotation une arête de coupe et une arête arrière (KR),
- un arrangement de tranchants est réalisé à l'arête de coupe de la gorge principale (HZ), lequel comprend un premier tranchant (SR) sous la forme d'un tranchant à rayon à la pointe (RB) de l'outil de fraisage et se raccordant à celui-ci un deuxième tranchant (SW) en forme d'hélice autour d'une partie longitudinale (WB) du corps de base,
- une première ou une deuxième face libre est associée au premier et au deuxième tranchant (SR, SW),
- la surface latérale de la partie longitudinale (WB) présente une structure de goujure comportant une multiplicité de creux (MT) et d'élévations (ME), et
- il est prévu à la pointe (RB), après la face libre (FR) suivant le contour de coupe du premier tranchant associé au premier tranchant, au moins une autre face polie libre (FZ1, FZ2, FZ3), dans laquelle la multiplicité de creux (MT) et d'élévations (ME) sont disposées de manière se succédant et hélicoïdale le long du rayon décroissant du deuxième tranchant (SW) au bord arrière (KR) avec un pas d'hélice égal au pas d'hélice du deuxième tranchant (SW) et un angle d'attaque hélicoïdal croissant, de sorte qu'une projection d'outil de fraisage (WZ) a un pas d'hélice différent de la surface enveloppe d'un volume rotatif (DF) .

2. Outil de fraisage selon la revendication 1, **caractérisé en ce que** le creux formant la gorge principale (HZ) arrive radialement essentiellement jusqu'à l'axe de rotation (RA) et comprend de préférence celui-ci.

3. Outil de fraisage selon la revendication 1 ou 2, **caractérisé en ce que** dans la partie longitudinale (WB) la proportion de surface de la gorge principale dans la surface de section transversale du volume de rotation (HV) vaut au moins 30 %, en particulier au moins 40 % et au maximum 60 %, en particulier au maximum 50 %.

4. Outil de fraisage selon l'une quelconque des revendications 1 à 3, **caractérisé en ce que** l'ouverture latérale de la gorge principale dans la direction périphérique entre l'arête de coupe (SW) et l'arête arrière (KR) vaut au moins 110°, de préférence au moins 130°.

5. Outil de fraisage selon l'une quelconque des revendications 1 à 4, **caractérisé en ce que** l'ouverture latérale de la gorge principale en direction périphérique vaut au maximum 180°, en particulier au maximum 160°.

6. Outil de fraisage selon l'une quelconque des revendications 1 à 5, **caractérisé en ce que** la forme de la section transversale de la gorge principale (HZ) est identique dans la partie longitudinale (WB) et dans la pointe (RB).

7. Outil de fraisage selon l'une quelconque des revendications 1 à 6, **caractérisé en ce que** l'arête arrière (KR) de l'ouverture latérale de la gorge principale (HZ) est d'au moins 10 %, en particulier d'au moins 20 %, plus proche de l'axe de rotation que le deuxième tranchant (SW) de l'arête de coupe.

8. Outil de fraisage selon l'une quelconque des revendications 1 à 7, **caractérisé en ce que** la structure de goujure présente plusieurs creux (MT) et plusieurs élévations (ME) se succédant en direction périphérique.

9. Outil de fraisage selon la revendication 8, **caractérisé en ce que** le nombre n d'élévations et de creux vaut respectivement au moins n = 4, en particulier au moins n = 6.

10. Outil de fraisage selon la revendication 8 ou 9, **caractérisé en ce que** des élévations (ME) voisines en direction périphérique sont disposées en décalage l'une par rapport à l'autre d'un angle (WE) d'au moins 10°, de préférence d'au moins 15°.

11. Outil de fraisage selon l'une quelconque des revendications 1 à 10, **caractérisé en ce que** la proportion de surface des élévations sur la surface latérale vaut au maximum 20 %, en particulier au maximum 10 %.

12. Outil de fraisage selon la revendication 11, **caractérisé en ce que** les élévations se présentent essentiellement sous forme de lignes.

13. Outil de fraisage selon l'une quelconque des revendications 1 à 12, **caractérisé en ce que** les creux sont enfoncés d'au maximum 5 %, en particulier d'au maximum 3 % du rayon du volume de rotation, radialement par rapport aux élévations voisines.

14. Outil de fraisage selon l'une quelconque des revendications 1 à 13, **caractérisé en ce que** les creux (MT) sont enfoncés d'au moins 1 %, en particulier d'au moins 1,5 % du rayon du volume de rotation, radialement par rapport aux élévations voisines (ME).

15. Outil de fraisage selon l'une quelconque des revendications 1 à 14, **caractérisé en ce que** les creux (MT) sont formés dans la surface latérale par plusieurs gorges secondaires (NZ) en forme d'hélice.

16. Outil de fraisage selon la revendication 15, **caractérisé en ce que** les gorges secondaires (NZ) présentent le même pas d'hélice que le deuxième tranchant (SW).

17. Outil de fraisage selon l'une quelconque des revendications 1 à 16, **caractérisé en ce que** le rayon de l'arrangement de tranchants vaut au maximum 1,5 mm.

18. Outil de fraisage selon l'une quelconque des revendications 1 à 17, **caractérisé en ce que** la longueur axiale de l'arrangement de tranchants vaut au moins le triple de son diamètre maximal.

19. Dispositif de fabrication de corps dentaires par usinage par fraisage à sec, sans fluide de refroidissement, d'une pièce en un matériau thermoplastique, avec un outil de fraisage selon l'une quelconque des revendications 1 à 18, pouvant tourner autour d'un axe de rotation et être déplacé dans les trois dimensions par rapport à la pièce.

20. Procédé de fabrication de corps dentaires en matériau synthétique, **caractérisé par** l'utilisation d'un outil de fraisage (WZ) selon la revendication 1 pour l'usinage par fraisage à sec d'une pièce en matériau synthétique (WS) sans apport de fluide de refroidissement au point de fraisage.

21. Procédé selon la revendication 20, **caractérisé en ce que** l'on choisit une pièce en un matériau thermoplastique ou chimioplastique.

22. Procédé selon la revendication 20 ou 21, **caractérisé en ce que** l'outil de fraisage est entraîné à au moins 10 000 tours par minute.
